# EUROPÄISCHE PATENTANMELDUNG

(11) **EP 1 493 487 A1**
(43) Veröffentlichungstag der Anmeldung: **05.01.2005**
(21) Anmeldenummer: 04103981.9
(22) Anmeldetag: 28.06.2001
(51) Int. Cl.: B01L 3/00, G01N 27/447

(54) **Mikrofluid-System mit ESI-Reststromregelung**

(62) Teilanmeldung aus: 01115587.6
(71) Anmelder: Agilent Technologies, Inc., Palo Alto, CA 94306 (US)
(72) Erfinder: Witt, Klaus, 75210, Keltern (DE); Dittmann, Monika, 76359, Marxzell (DE); Bek, Friedrich, 76327, Pfinztal (DE)
(74) Vertreter: Barth, Daniel

(57) **Zusammenfassung**

Gezeigt wird ein Mikrofluid-System mit einem Arbeitskanal (270) in dem ein Fluid und/oder darin enthaltene Bestandteile vermittels einer treibenden Kraft in Richtung des Arbeitskanals bewegbar sind. Ein Meßfühler ist zur Messung einer dem Fluid zugeordneten und im Bereich des Fluids ableitbaren Meßgröße und ein Regler (192) zur Regelung der treibenden Kraft und/oder einer dadurch beeinflußbaren Kenngröße vorgesehen, wobei der Regler (192) mit dem Meßfühler und einer Einrichtung zur Veränderung der treibenden Kraft (189) und/oder der dadurch beeinflußbaren Kenngröße gekoppelt ist. Mit dem Arbeitskanal (270) ist wenigstens ein in diesen einmündender Meßkanal (299) verbunden, der mit dem Meßfühler gekoppelt ist. Der Arbeitskanal (270) und der Meßkanal (299) sind miteinander fluidverbunden und führen zu einem gemeinsamen Electro-Spray-Interface - ESI - -Punkt. Der Arbeitskanal (270) und der Meßkanal (299) sind an ihrem jeweiligen, von dem gemeinsamen Kanalraum entfernten Ende jeweils mit einer Elektrode (283, 300) zur Ausübung eines elektrischen Feldes auf das Fluid kontaktiert, und der Regler (192) regelt die Summe des elektrischen Stromes in dem gemeinsamen ESI-Punkt dergestalt, daß ein bestimmter ESI-Reststrom verbleibt.

## Beschreibung

Mikrofluid-Systeme sind aus der US 5,965,001, der US 5,800,690 sowie aus der Zeitschrift Electrophoresis (2000), Seite 100 bis 106 sowie Seite 107 bis 115 vorbekannt. Der Inhalt dieser Dokumente wird an dieser Stelle zu beliebigen Zwecken in vollem Umfang aufgenommen, da in diesen Unterlagen wichtige Merkmale, insbesondere betreffend die konstruktive und werkstoffliche Ausbildung derartiger Mikrofluid-Systeme sowie betreffend mögliche Verfahren für den Transport und die Führung von Fluiden und/oder darin enthaltenen Bestandteilen in derartigen Mikrofluid-Systemen offenbart sind, also von Merkmalen, für die einzeln oder in Kombination untereinander, in Kombination mit den in dieser Anmeldung zusätzlich offenbarten Merkmalen Schutz beansprucht wird.

Von besonderem Interesse sind derartige Mikrofluid-Systeme für Anwendungen im Bereich der Elektroosmose und/oder der Elektrophorese, wobei aus Gründen der Ökonomie und einem entsprechend größeren Anwendungsspektrum bevorzugt ein offenes Netzwerk von miteinander fluidverbundenen Miniaturkanälen eingesetzt wird. Dabei wird die Bewegung der individuellen Flüssigkeiten oder darin enthaltener Zellen, Organismen oder Bestandteile, wie Partikel oder Ionen oder neutrale Stoffe, bislang meist durch Ausübung elektrischer oder elektrokinetischer Kräfte, insbesondere durch elektrische Spannung, elektrischen Strom, elektrische Leistung oder durch andere elektrische Parameter kontrolliert. Diese elektrischen Kenngrößen werden üblicherweise mittels geeigneter Elektroden in das Fluid eingeleitet, die am jeweiligen Ende der sich teilweise kreuzenden Kanäle mit sogenannten Reservoirs kontaktiert sind, welche wiederum in Fluidverbindung mit den einzel nen Mikrokanälen stehen.

Ein Problem bei der Anwendung von elektrokinetischen Kräften unter Verwendung von Elektroden ist es, daß diese nicht unmittelbar in bzw. an den Mikrokanälen des Mikrofluid-Systems eingesetzt werden können, da es an den Elektroden häufig zu einer unerwünschten Gasblasenbildung kommt. Diese Gasblasen können jedoch in den miniaturisierten Kanälen zu einer Erhöhung des wirksamen Widerstandes bis hin zu einem unendlich großen wirksamen Widerstand führen. Aus diesen Gründen werden die Elektroden üblicherweise mit Reservoirs verbunden, die ein vergleichsweise großes Fluid-Volumen aufnehmen können und die gegenüber der Geometrie der Miniaturkanäle deutlich größere Abmaße aufweisen. Dadurch ist jedoch der Einsatz der Elektroden auf das jeweilige Ende der Miniaturkanäle begrenzt. Für eine exakte und reproduzierbare Versuchsdurchführung sind jedoch häufig die elektrischen Parameter an den Kreuzungspunkten bzw. denjenigen Übergangsbereichen von Interesse, an denen die einzelnen Mikrofluidkanäle ineinander einmünden.

Es ist Aufgabe der Erfindung, ein verbessertes Mikrofluid-System zu schaffen.

Diese Aufgabe wird durch die Merkmale der unabhängigen Ansprüche gelöst. Vorteilhafte Ausführungsformen werden durch die Merkmale der Unteransprüche dargestellt.

Dadurch, daß wenigstens ein Meßfühler vorgesehen ist, und der Regler mit dem Meßfühler und der Einrichtung zur Veränderung der treibenden Kraft und/oder der dadurch beeinflußbaren Kenngröße gekoppelt ist, wird ein besserer Durchgriff auf das jeweilige Betriebsverhalten des einzelnen Mikrofluid-Systems möglich, indem auf innere und/oder äußere Störgrößen eine entsprechende Regelung der treibenden Kraft und/oder dadurch beeinflußbarer Kenngrößen und unter Anwendung jeweils geeigneter Algorithmen eine dynamische Sollwertanpassung realisiert werden kann. Auf diese Weise läßt sich auch ein breiteres Anwendungs- und Einsatzspektrum ermöglichen, weil sich das System beispielsweise auf anwenderspezifische Fehler bzw. bei einer Variation von vom Anwender bevorzugten Proben quasi von selbst anpassen kann.

Dadurch, daß mit dem Arbeitskanal wenigstens ein, in diesen einmündender Meßkanal fluidverbunden ist, der mit dem Meßfühler gekoppelt ist, lassen sich insbesondere an den bisher für den Einsatz von Elektroden ungeeigneten Kanal-Kreuzungsstellen bzw. denjenigen Stellen, an denen ein oder mehrere Kanäle in ein oder mehrere andere Kanäle einmünden, geeignete Meß- und/oder Eingriffsmöglichkeiten für die Ein- und/oder Ausleitung elektrischer Kenngrößen schaffen, indem dort quasi "virtuelle" Elektroden zur Verfügung gestellt werden. Zu diesem Zwecke kann sowohl ein an der gewünschten Stelle bereits existierender Miniaturkanal ausgenutzt werden, oder kann das Design des jeweiligen Mikrofluid-Systems in einfacher Weise dadurch geändert werden, daß ein weiterer Miniaturkanal vorgesehen wird, der an der gewünschten Meßstelle in einen oder in mehrere vorhandene Kanäle einmündet und der an seinem gegenüberliegenden Ende in Fluidverbindung mit einem geeigneten Reservoir steht, das wiederum mit einer Elektrode kontaktiert ist.

Zweckmäßigerweise ist das Mikrofluid-System mit einem offenen Netzwerk von miteinander fluidverbundenen Kanälen ausgebildet, wobei wenigstens drei, vorzugsweise vier der Kanäle in einen gemeinsamen, insbesondere punktartig ausgebildeten Kanalraum einmünden, wobei einer der Kanäle als Meßkanal fungiert. Im Rahmen einer derartigen Drei- bzw. Vierkanaltechnik lassen sich besonders günstig über den Meßkanal bzw. die Meßkanäle regelbare Stoffflüsse erreichen, welche die Anwendung von ökonomisch handhabbaren Regelalgorithmen ermöglichen und die ein erheblich verbreitetes Anwendungs- und Einsatzspektrum derartiger Mikrofluid-Systeme ermöglichen.

Es ist besonders zweckmäßig, wenn alle Elektroden sowohl als Arbeitselektrode als auch als Meßelektrode einsetzbar sind bzw. eingesetzt werden. Dadurch wird das Anwendungs- und Einsatzspektrum bestehender Mikrofluid-Systeme vorteilhaft erweitert, in dem an beliebigen, mit Arbeitselektroden versehenen Kanalstellen nunmehr auch die für eine günstige Regelung der Stoffflüsse geeigneten Meßfühler zur Verfügung stehen.

Vorteilhafterweise regelt der Regler die treibende Kraft und/oder die dadurch beeinflußbare Kenngröße derart, daß diese insbesondere unabhängig von inneren und/oder äußeren Störgrößen im wesentlichen konstant gehalten wird bzw. werden, so daß eine größere Betriebssicherheit und ein größeres Anwendungs-Einsatzspektrum ermöglicht sind. Mit "konstant" ist im Rahmen der Offenbarung dieses Schutzrechts nicht nur ein über der Zeit gleichbleibender absoluter Kennwert gemeint, sondern eine beliebige Kennwertfunktion über der Zeit, also beispielsweise ein "Gradient" oder eine "Rampe", die aber durch die erfindungsgemäße Regelung invariant in Reaktion auf innere oder äußere Störeinflüße gehalten wird.

Von besonderem Vorteil ist es, wenn der Regler die treibende Kraft und/oder die dadurch beeinflußbare Kenngröße derart regelt, daß der Gradient der treibenden Kraft und/oder der Gradient der durch die treibende Kraft beeinflußbaren Kenngröße über einen bestimmten Abschnitt des Arbeitskanals, insbesondere unabhängig von inneren und/oder äußeren Störgrößen, im wesentlichen konstant gehalten wird bzw. werden. Auf diese Weise läßt sich in dem Arbeitskanal eine im wesentlichen konstante Geschwindigkeit bzw. ein im wesentlichen konstanter Durchfluß des Fluids und/oder darin enthaltener Bestandteile erreichen, was für viele Anwendungen, insbesondere für Anwendungen im Bereich der Trennanalyse interessant ist.

Es ist ferner vorteilhaft, wenn der Regler die treibende Kraft und/oder die dadurch beeinflußbare Kenngröße dergestalt regelt, daß eine im wesentlichen konstante oder vorbestimmte joulesche Verlustleistung erreicht wird, so daß die in dem Fluidfaden des Arbeitskanals auftretende Temperatur konstant gehalten wird oder die Temperaturerhöhung bestimmbar ist und folglich einer weiteren rechnerischen Auswertung zuführbar ist. Dabei ist es zweckmäßig, wenn die Regelung bzw. die Identifikation der Probenbestandteile abhängig von der Eigenmobilität im Zusammenhang mit der am Trennkanal angelegten Differenzspannung erfolgt, um bei auftretenden Leitfähigkeitsveränderungen eine Identifikation der Probenbestandteile über deren Eigenmobilität zu ermöglichen.

Von besonderem Vorteil ist es, wenn bei dem als offenes Netzwerk von miteinander fluidverbundenen Kanälen ausgebildeten Mikrofluid-System mehrere Kanäle in einen gemeinsamen, insbesondere punktartig ausgebildeten Kanalraum einmünden, wobei wenigstens einer der Kanäle als Meßkanal fungiert, und wobei die Kanäle an ihrem jeweiligen, von dem Kanalraum entfernten Ende, jeweils mit einer Elektrode zur Ausübung eines elektrischen Feldes auf das Fluid kontaktiert sind, und wobei die Elektroden mit elektrischem Strom und/oder elektrischer Spannung beaufschlagbar sind, und wobei einem ersten Kanal eine erste Elektrode und einem zweiten Kanal eine zweite Elektrode zugeordnet ist, gekennzeichnet durch die folgenden Schritte:
a) Regelung des elektrischen Stromes (I₂) an der zweiten, als Meßfühler fungierenden Elektrode auf den Wert Null;
b) Messen der elektrischen Spannung (U₂) an der zweiten Elektrode, wobei an der ersten Elektrode eine beliebige Spannung (U₁) angelegt ist;
c) Regelung der elektrischen Spannung (U₁) an der ersten Elektrode dergestalt, daß die Differenz zwischen U₁ und U₂ einen vorbestimmten Wert erreicht.

Auf diese Weise lassen sich derartige Mikrofluid-Systeme bei Anwendungen auf dem Gebiet der Kapillarelektrophorese, der Flüssigkeitskromatographie und bei chemischen Reaktionen, insbesondere bei DNA/RNA-Assays oder Protein-Assays mit einer höheren Betriebssicherheit gegenüber inneren und/oder äußeren Störgrößen und bei einem erweiterten Anwendungs- und Einsatzspektrum einsetzen, die auch den aktuellen und den zukünftigen Anwenderbedürfnissen bei gleichbleibend hoher Qualität der Analysenergebnisse auch über einen langen Zeitraum genügen.

Dabei ist es ferner zweckmäßig, daß bei dem als offenes Netzwerk von miteinander fluidverbundenen Kanälen ausgebildeten Mikrofluid-System wenigstens vier Kanäle in einen gemeinsamen, insbesondere punktartig ausgebildeten Kanalraum einmünden, wobei wenigstens einer der Kanäle als Meßkanal fungiert, und wobei wenigstens drei der Kanäle an ihrem jeweiligen, von dem Kanalraum entfernten Ende, jeweils mit einer Elektrode zur Ausübung eines elektrischen Feldes auf das Fluid kontaktiert sind, und wobei die Elektroden mit elektrischem Strom und/oder elektrischer Spannung beaufschlagbar sind, und wobei dem ersten Kanal eine erste Elektrode. dem zweiten Kanal eine zweite Elektrode und dem dritten Kanal eine dritte Elektrode zugeordnet ist, gekennzeichnet durch die folgenden Schritte:
a) Regelung des elektrischen Stromes (I₂) an der zweiten, als Meßfühler fungierenden Elektrode auf den Wert Null;
b) Messen der elektrischen Spannung (U₂)an der zweiten Elektrode, wobei an der ersten Elektrode eine beliebige Spannung (U₁)angelegt ist;
c) Regelung der elektrischen Spannung (U₁) an der ersten Elektrode dergestalt, daß die Differenz zwischen U₁ und U₂ einen vorbestimmten Wert erreicht;
d) Messen der elektrischen Stromstärke (I₁) an der ersten Elektrode;
e) Berechnen einer Soll-Stromstärke (I₃-Soll) an der dritten Elektrode als Summe der an der ersten Elektrode gemessenen Stromstärke (I₁) und einer vorbestimmten, dem vierten Kanal zugeordneten Stromstärke (I₄);
f) Regelung der Stromstärke (I₃) an der dritten Elektrode auf den Wert der zuvor berechneten Soll-Stromstärke (I₃-Soll);
g) Wiederholung der Schritte b) bis f).

Auf diese Weise lassen sich die vorstehend bezeichneten Vorteile auch in hochkomplexen, auf der Vierkanaltechnik basierenden Mikrofluid-Systemen unter Anwendung eines einfachen mathematischen Algorithmus erreichen.

Gemäß der Erfindung führen bei dem als offenes Netzwerk von miteinander fluidverbundenen Kanälen ausgebildeten Mikrofluid-System wenigstens zwei Kanäle zu einem gemeinsamen ESI- (Electro -Spray-Interface) -Punkt, wobei wenigstens zwei der Kanäle an ihrem jeweiligen, von dem gemeinsamen Kanalraum entfernten Ende, jeweils mit einer Elektrode zur Ausübung eines elektrischen Feldes auf das Fluid kontaktiert sind, und wobei die Elektroden mit elektrischem Strom und/oder elektrischer Spannung beaufschlagbar sind, und wobei die Summe des elektrischen Stromes in dem gesamten Mikrofluid-System dergestalt geregelt wird, daß gemäß dem Kirchhoffschen Gesetz ein bestimmter ESI-Reststrom verbleibt.

Vorstehende Merkmale tragen sowohl einzeln als auch in Kombination untereinander zu einem Mikrofluid-System bzw. einem Verfahren zum Transport und der Führung eines Fluids und/oder darin enthaltener Bestandteile in einem derartigen Mikrofluid-System bei, das ein breiteres Anwendungs- und Einsatzspektrum und eine verringerte Empfindlichkeit gegenüber inneren und/oder äußeren Störgrößen und folglich eine größere Betriebssicherheit ermöglicht.

Weitere Merkmale, Gesichtspunkte und Vorteile der Erfindung sind dem nachfolgenden, anhand der Figuren abgehandelten Beschreibungsteil entnehmbar, in dem bevorzugte Ausführungsbeispiele der Erfindung beschrieben sind.

Es zeigen:
- Fig. 1: ein erfindungsgemäßes Mikrofluid-System in Form eines Mikrofluid-Chips mit insgesamt 16 Reservoirs zur Aufnahme von fluiden Substanzen, wobei diese Reservoirs mit einem offenen Netzwerk von Mikrokanälen in Fluidverbindung stehen und mit einem als Arbeitskanal dienenden Trennkanal, das insbesondere in der elektrophoretischen Flüssigkeitsanalyse einsetzbar ist;
- Fig. 2: eine schematische Darstellung eines einfach aufgebauten Mikrofluid-Systems gemäß der Erfindung, mit Darstellung der für die Steuerung und Regelung der hier elektrischen bzw. elektrokinetischen Prozesse erforderlichen Einrichtungen;
- Fig. 3: ein weiteres Mikrofluid-System gemäß einer bevorzugten Ausführungsform der Erfindung unter Verwendung eines Referenzkanals und unter Ausbildung einer virtuellen Elektrode am Beispiel einer massenspektrometrischen Analysenanwendung;
- Fig. 4: ein weiteres Mikrofluid-System mit einem Netzwerk von untereinander fluidverbundenen Mikrokanälen und unter Verwendung eines mit einer Meßelektrode kontaktierten Referenzkanals zur Erläuterung einer besonders vorteilhaften Verfahrensweise.

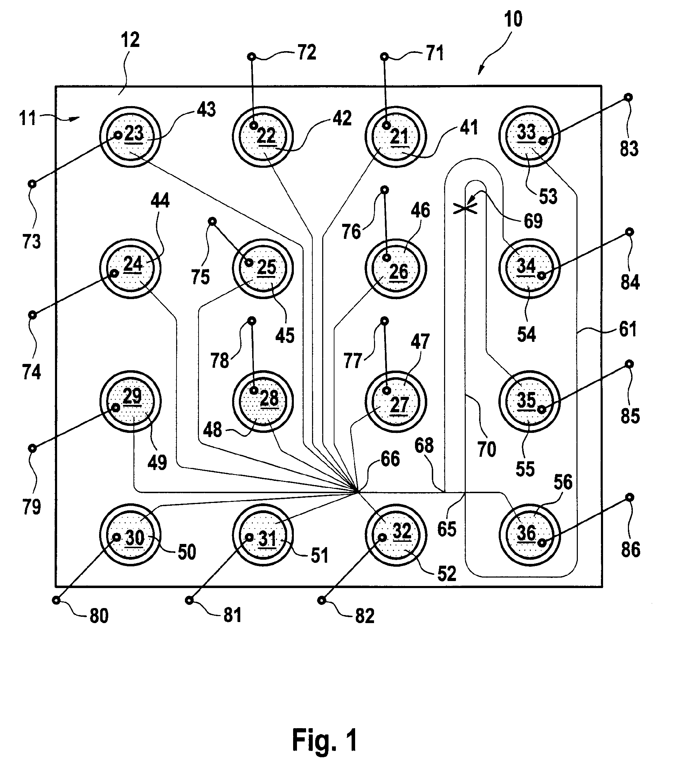

Das in Fig. 1 gezeigte Mikrofluid-System 10 beinhaltet einen Mikrofluid-Chip 11. Dieser umfaßt das Substrat 12, in das hier insgesamt sechzehn Reservoirs 21 bis 36 zur Aufnahme von diversen fluiden Substanzen aufgenommen sind. Dabei sind zwölf Reservoirs 21 bis 32 zur Aufnahme der Proben 41 bis 52, ein Reservoir 33 zur Aufnahme eines als Trennmedium dienenden Puffers 53 sowie die mit etwas Puffer vorgefüllten Reservoirs 34, 35, 36 zur Aufnahme von Abfall 54, 55, 56 vorgesehen. Die Reservoirs 21 bis 36 sind untereinander durch Mikro-Kanäle fluidverbunden, die miteinander ein offenes Netzwerk ausbilden. Dies bedeutet, daß jedes der Reservoirs 21 bis 36 in Fluidverbindung mit jedem anderen Reservoir steht. Die in die Reservoirs 21 bis 32 mündenden Kanäle münden wiederum im Bereich einer Übergangsstelle 66 in einen einzigen Kanal, der sich im Bereich einer Übergabestelle 68 in zwei Kanäle aufteilt. Der erste Kanal dieser beiden Kanäle mündet in das Reservoir 34, das zur Aufnahme des Abfalls 54 dient. Der zweite Kanal dieser beiden Kanäle mündet in den Injektionsraum der Injektionsstelle 65, die wie hier gezeigt als zwei sich kreuzende Kanäle mit insgesamt vier Kanal-Teilen gestaltet sein kann. Dort mündet auch der Kanal 61 ein. Dieser mündet an seinem von dem Injektionsraum abgewandten Ende in das Reservoir 33. Dieses dient zur Aufnahme des als Trennsubstanz fungierenden Puffers 53. Der Einmündungsstelle des Kanals 61 in den Injektionsraum gegenüberliegend mündet der Arbeitskanal 70. Dieser dient zur eigentlichen Trennung der zu analysierenden Substanzen und mündet wiederum in das Reservoir 35 zur Aufnahme des Abfalls 55 nachdem die analytische xxxDetektionstelle 69 passiert wurde. Der der Injektionsstelle 65 zugeordnete Injektionsraum ist im Ausführungsbeispiel als Kreuzungspunkt der vorstehend beschriebenen vier Kanal-Teile gestaltet, die in dieser Ausführung jeweils um einen Winkel von 90 Grad versetzt zueinander in einer gemeinsamen Ebene angeordnet sind, wobei die sich jeweils gegenüberliegenden Kanalteile in dem hier gezeigten Fall zueinander fluchtend angeordnet sind.

Jedes Reservoir 21 bis 36 ist mit einer Elektrode 71 bis 86 kontaktiert. Diese dienen zur Ein- bzw. Ausleitung von elektrischer Spannung und/oder elektrischem Strom und können gemäß der Erfindung zugleich als Meßelektrode dienen. Mit deren Hilfe können dem aktuellen Betriebsverhalten des Mikrofluid-Systems 10 zugeordnete elektrische Parameter erfaßt und einem Regler zur Regelung der treibenden Kraft und/oder einer dadurch beeinflußbaren Kenngröße zugeführt werden. Im Ausführungsbeispiel sind als treibende Kraft elektrokinetische Kräfte vorgesehen, welche durch Einleitung bzw. Ausübung von elektrischen Spannungen über die Elektroden 71 bis 86 auf die jeweiligen Fluide 41 bis 56 eingeleitet bzw. übertragen werden können, so daß sich die Fluide bzw. darin enthaltene Bestandteile in der vom Anwender gewünschten Richtung und Geschwindigkeit durch die ein offenes Netzwerk bildenden Miniaturkanäle bewegen können.

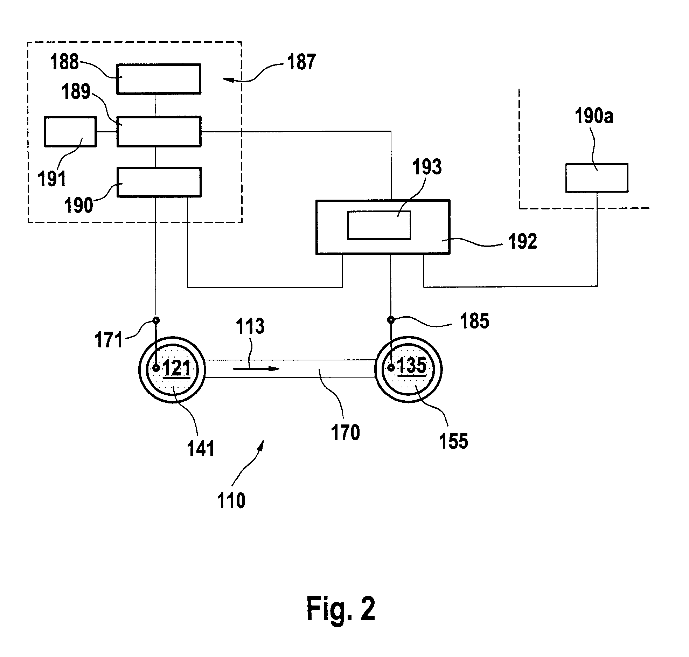

Das in Fig. 2 teilweise schematisch gezeigte Mikrofluid-System 110 ist besonders einfach gestaltet. Diese Figur dient auch zur Darstellung der für die Steuerung und Regelung der das Fluid bzw. die darin enthaltenen Bestandteile treibenden Kraft und/oder der dadurch beeinflußbaren Kenngrößen. Das Mikrofluid-System 110 weist den einen Arbeitskanal 170 auf, in dem das Fluid 141 und/oder darin enthaltene Bestandteile vermittels einer treibenden Kraft, hier eines durch die Spannungsquelle 188 erzeugten elektrischen bzw. elektrokinetischen Feldes in Richtung (Pfeil 113) des Arbeitskanals 170 bewegbar sind. An den jeweiligen Enden des Arbeitskanals 170 sind die Reservoirs 121 und 135 angeordnet, die mit dem Arbeitskanal 170 in Fluidverbindung stehen. Jedes Reservoir 121, 135 ist jeweils mit einer Elektrode 171 bzw. 185 zur Ein- bzw. Ausleitung von elektrischen Kenngrößen kontaktiert. Unter Anlegung einer elektrischen Spannung an die Elektrode 171 kann das Fluid 141 bzw. können die darin enthaltenen Bestandteile in Richtung (Pfeil 113) des Arbeitskanals 170 durch diesen hindurchbewegt werden und kann bzw. können schließlich an seinem anderen Ende als Abfall 155 in das Reservoir 135 gelangen. Bei der Trennanalyse in dem Arbeitskanal 170 ist es von besonderer Wichtigkeit, daß das Fluid 141 bzw. die daran enthaltenem Bestandteile sich mit einer im wesentlichen konstanten Geschwindigkeit durch den Arbeitskanal 170 bewegen, um eine möglichst exakte Analyse vornehmen zu können. Ein charakteristischer Parameter zur Identifikation eines Probenbestandteiles ist die Eigenmobilität. Diese Stoffkonstante führt im Zusammenhang mit den Betriebsparametern Feldstärke und Viskosität des Trennmediums zu einer charakteristischen Geschwindigkeit. Da die Viskosität des Trennmediums aber stark temperaturabhängig ist, ergibt sich das Bedürfnis, die der Flüssigkeit im Trennkanal zugeordnete Temperatur exakt zu bestimmen oder zu beeinflussen. Während die Außenfläche des Mikrofluid-Chips mit geeigneten Mitteln auf eine gewünschte Temperatur gebracht werden kann, ist durch das Auftreten der "joule-schen Verlustleistung" im Innern des Fluids eine erhöhte Temperatur gegeben, die aber auf Grund der miniaturisierten Geometrie nicht gemessen werden kann. Zu diesem Zwecke ist es vorteilhaft, die auftretende Verlustleistung unabhängig von inneren und äußeren Störeinflüssen konstant zu halten. Reproduzierbare Betriebsbedingungen, und damit Ergebnisse, sind somit erreichbar. Abhängig vom wirksamen Widerstand im Arbeitskanal und/oder der Leitfähigkeit des Fluids 141 kann sich die auftretende Verlustleistung ändern, mit der Folge, daß bei Anlegung einer im wesentlichen konstanten Spannung an den Elektroden 171 und 185, gemäß dem Stand der Technik, sich abhängig von den inneren und/oder äußeren Störgrößen im Innern des auch als Fluidfaden bezeichneten Fluidstromes eine gegenüber dem Sollwert veränderte Temperatur einstellt, so daß sich über die Viskosität die Momentangeschwindigkeit der Probenbestandteile im Trennkanal abhängig von den inneren und/oder äußeren Störgrößen ausbildet.

Dies kann zu entsprechend unterschiedlichen Wanderungsgeschwindigkeiten des Fluids 141 und/oder darin enthaltener Bestandteile führen, so daß entsprechende Fehler bei der Analyse, hier im wesentlichen bei der Identifikation, auftreten können.

Zur Vermeidung der vorstehend beschriebenen Nachteile ist die Elektrode 185 als Meßelektrode, d.h. als Meßfühler zur Messung einer dem Fluid 141 zugeordneten bzw. an das Fluid 141 gekoppelten und im Bereich des Fluids 141 ableitbaren Meßgröße, hier des elektrischen Stromes, vorgesehen. Mit dem Meßfühler 185 ist der Regler 192, hier über elektrische Leitungen, gekoppelt. Dieser Regler 192 gehorcht einem vorbestimmten mathematischen Algorithmus 193 und kann auch als programmierbarer Regler gestaltet sein. Der Regler 192 ist seinerseits mit einer Einrichtung zur Veränderung der treibenden Kraft 189, hier der elektrischen Spannung gekoppelt, welche ein Stellglied ausbildet. Die Einrichtung zur Veränderung der treibenden Kraft 189 ist mit der Spannungsquelle 188 gekoppelt, welche die notwendige elektrische Spannung bzw. das notwendige elektrische Feld liefert. Mit der Einrichtung zur Veränderung der treibenden Kraft 189 ist wiederum eine Steuereinrichtung 191 zur Steuerung der Einrichtung zur Veränderung der treibenden Kraft nach bestimmten voreingestellten Parametern verbunden. Dabei kann es sich um die gemäß dem Stand der Technik in einem sogenannten "Skript" festgelegten Parameter handeln. Diese können auch in einer Speichereinheit, beispielsweise einem RAM bzw. ROM abgelegt sein. Die Einrichtung zur Veränderung der treibenden Kraft 189 ist ferner mit einer Reglereinrichtung 190 zur Bereitstellung von stabilisierten, d.h. im wesentlichen konstanten elektrischen Spannungen oder Strömen gekoppelt, die wiederum mit der Elektrode 171 elektrisch gekoppelt ist. Der Regler 192 erhält von der Regeleinrichtung 190 den aktuellen Status, welcher mit Hilfe des vorbestimmten mathematischen Algorithmus 193 mit Kenntnis des gemessenen Stromes in eine aktuelle Abweichung der Verlustleistung und damit in einen Korrekturwert umgerechnet werden kann. Dieser Korrekturwert wird zur Steuerung der Einrichtung 189 zur Veränderung der treibenden Kraft verwendet. Auf diese Weise läßt sich ein sich an das aktuelle Betriebsverhalten des Mikrofluid-Systems 110 anpassender überlagerter Regelkreis schaffen, mit dem es möglich ist, die auftretende Verlustleistung und damit die im Fluidfaden des Arbeitskanals 170 auftretende Temperaturerhöhung unabhängig von inneren und/oder äußeren Störgrößen im wesentlichen konstant zu halten.

Die Identifikation der Probenbestandteile kann nun in Erwartung der konstanten Temperaturverhältnisse und in Kenntnis der meßbaren Spannungdifferenz am Trennkanal durch ein Zeitfenster erfolgen. Dieses Zeitfenster, gerechnet ab Zeitpunkt der Einspritzung, ergibt sich aus der entsprechenden Mobilität im elektrischen Feld über die Entfernung im Trennkanal vom Einspritzpunkt bis zum Ort der Detektion.

Die Spannungsquelle 188, die Einrichtung zur Veränderung der treibenden Kraft 189, die Steuereinrichtung 191 und die Reglereinrichtung 190 bilden die Spannungsversorgungseinheit 187. Es versteht sich, daß eine derartige Spannungsversorgungseinheit, zumindest die Einrichtung zur Veränderung der treibenden Kraft 189 und die Reglereinrichtung 190, jeder bzw. allen Elektroden 171, 185 auch bei einem mit mehr als zwei Elektroden ausgebildeten Mikrofluid-System, entsprechend den Anwenderbedürfnissen beliebig mehrfach eingesetzt werden kann. In einem solchen Fall wird dem Regler 192 auch der jeweilige Status von der der Elektrode 185 zugeordneten Regeleinrichtung 190a zugeführt.

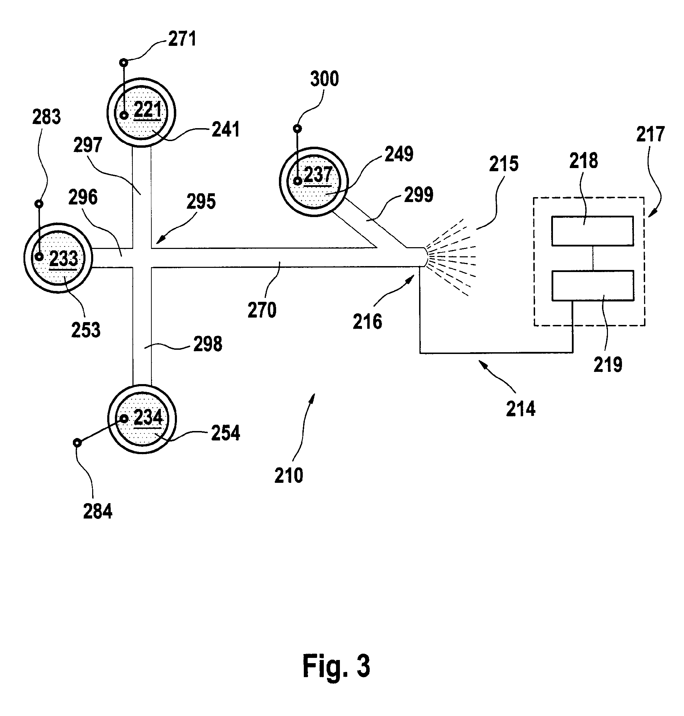

Die Fig. 3 zeigt ein weiteres Mikrofluid-System, wie es für eine massenspektroskopische Analyse von fluiden Substanzen und/oder darin enthaltener Bestandteile eingesetzt werden kann. Das Mikrofluid-System 210 ist mit zwei, sich hier rechtwinklig kreuzenden Kanälen gestaltet, die wiederum mit vier Kanalteilen 296, 297, 298 und 270 gestaltet sind. In dem hier gezeigten Fall fluchten die Kanalteile 296 und 270 sowie die Kanalteile 297 und 298 jeweils. Im übrigen sind die Kanalteile 296, 297, 298 und 270 jeweils in einem Winkel von hier 90 Grad zueinander in einer gemei n-samen Ebene ausgebildet. Dabei kreuzen sich die Kanalteile 296, 297, 298 und 270 in der Kreuzungsstelle 295, welche einen Injektionsraum für die zu analysierende Probe bilden. Am Ende der Kanalteile 296, 297 und 298 ist jeweils ein Reservoir 233, 221 und 234 vorgesehen, das jeweils mit dem zugehörigen Kanalteil in Fluidverbindung steht. Diese Reservoirs 221, 233, 234 sind jeweils mit einer Elektrode 271, 283, 284 kontaktiert. In dem gezeigten Ausführungsbeispiel nimmt das Reservoir 221 die zu analysierende Probe 241 auf und das Reservoir 234 dient zur Aufnahme des Abfalls 254. Das Reservoir 233 dient zur Aufnahme des als Trennsubstanz dienenden Puffers 253. An dem der Kreuzungsstelle 295 bzw. dem Reservoir 233 gegenüberliegenden Ende des als Arbeitskanal ausgebildeten Kanalteils 270 ist ein sogenanntes Elektro-Spray-Interface (ESI) 214 vorgesehen. Dieses ist mit einer nicht näher gezeigten Düse gestaltet, welche zur Erzeugung eines Elektro-Sprays 215 dient. Zum Zwecke einer massenspektroskopischen Analyse wird mit Hilfe des Spannungserzeugers 219 eine sogenannte "ESI"-Spannung generiert, die zur Erzeugung des Elektro-Sprays 215 dient. Die ESI-Spannung ist in der Regel vom Anwender einstellbar, um sie auf einen spezifischen Massenspektrometer und die gegebenen Bedingungen anzupassen. Damit schwankt diese Spannung von Gerät zu Gerät, oder je nach den Einsatzbedingungen. Vermittels des durch den Spannungserzeuger 219 erzeugten elektrischen Feldes wird das am Ende des Kanals 270 austretende Fluid in Richtung auf den Meßfühler 218 des Massenspektrometers beschleunigt. Auf diese Weise kann ein Elektro-Spray 215 erzeugt werden, welches eine massenspektroskopische Analyse der zu analysierenden Probe ermöglicht. Auch für diese Anwendung ist es erforderlich, daß die Spannungsdifferenz zwischen der Kreuzungsstelle 295 und dem düsenseitigen Ende des Arbeitskanals 270 während der Analyse im wesentlichen konstant bleibt. Dies ist jedoch mit den nach dem Stande der Technik bekannten Vorrichtungen und Verfahren in vielen Fällen nicht gewährleistet, weil die vorstehend beschriebenen inneren und/äußeren Störgrößen zu einer Veränderung der Spannungsdifferenz und demgemäß zu einer Veränderung der elektrischen Parameter und der Strömung im Arbeitskanal führen können.

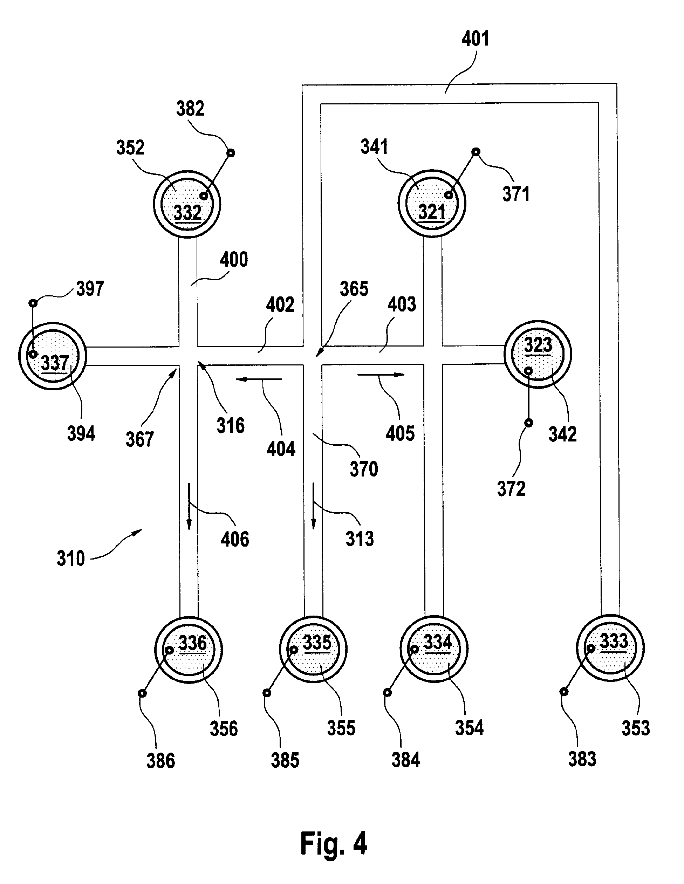

Nun könnte es zu diesem Zwecke naheliegend sein, eine weitere, als Meßelektrode dienende Elektrode im Bereich des düsenseitigen Endes des Arbeitskanals anzuordnen, um auf diese Weise einen Regelungsmechanismus entsprechend der Darstellung im Zusammenhang mit der Fig. 2 bzw. wie nachstehend im Zusammenhang mit der Fig. 4 beschrieben, zu ermöglichen. In der Praxis ist jedoch der Einsatz von Meßelektroden an bzw. in den miniaturisierten Mikrokanälen nicht unkritisch und ist in vielen Fällen nicht möglich. Denn an den Kontaktstellen können elektrolytische Vorgänge und demzufolge eine Oxidation der Elektroden auftreten, mit der Folge veränderter Übergangswiderstände. Infolge der veränderten Übergangswiderstände verändern sich jedoch die elektrischen Parameter und dementsprechend verändert sich die Spannungsdifferenz über den Analyseabschnitt in dem Trennkanal. Schließlich können an den Kontaktstellen der Elektroden unerwünschte Blasen auftreten, welche den wirksamen Widerstand in den einen nur sehr kleinen Durchflußquerschnitt aufweisenden Mikrokanälen unsystematisch erhöhen können, bis hin zu einem auf den Wert unendlich ansteigenden wirksamen Widerstand. Zur Lösung dieses Problems wird mit der vorliegenden Erfindung quasi eine virtuelle Elektrode 216 an derjenigen Meßstelle für bestimmte elektrische Parameter geschaffen, die von Interesse ist. Zu diesem Zwecke wird vorgeschlagen, einen Referenzkanal 299 vorzusehen, der an der interessierenden Meßstelle in den Arbeitskanal 270 einmündet und an dessen gegenüber liegendem Ende dann in bekannter Weise ein Reservoir 237 zur Aufnahme einer Meßflüssigkeit 294 angeordnet ist. Mit dem Reservoir 237 ist in ebenfalls bekannter Weise eine Meßelektrode 300 kontaktiert ist. Es versteht sich, daß in besonders günstiger Ausgestaltung der Erfindung zu den vorgenannten Zwecken bereits bestehende Kanäle und Elektroden sinnvoll ausgenutzt werden können. Durch die Verwendung derartiger Referenz-Kanäle unter Ausbildung einer virtuellen Elektrode am Meßort können folglich die vorstehend beschriebenen Nachteile vermieden werden.

Das in Fig. 4 gezeigte Mikrofluid-System 310 stellt einen Teilausschnitt des Mikrofluid-Systems 10 gemäß Fig. 1 dar und ist im übrigen mit ähnlich dem Mikrofluid-System 210 gemäß Fig. 3 gestalteten Kanalteilen ausgebildet. Das Mikrofluid-System 310 umfaßt einen Verbindungskanal 401, der einerends mit dem Reservoir 333 fluidverbunden ist, in dem der als Trennsubstanz dienende Puffer 353 aufgenommen ist. Der Verbindungskanal 401 mündet an der Injektionsstelle 365 in einen Injektionsraum. In diesen Injektionsraum münden noch drei weitere Kanäle, nämlich die beiden Seitenkanäle 402 und 403 sowie der hier als Trennkanal dienende Arbeitskanal 370. Der Arbeitskanal 370 weist an seinem von der Injektionsstelle 365 abgewandten Ende ein Reservoir 335 zur Aufnahme des Abfalls 355 auf. An die hier fluchtend zueinander ausgebildeten Seitenkanäle 402 und 403 schließen sich die im Ausführungsbeispiel gleich gestalteten und in diesem Falle symmetrisch zum Arbeitskanal 370 angeordneten Kanalteile an. Dabei durchdringen sich jeweils zwei Kanäle an Kreuzungsstellen, so daß ebenfalls jeweils vier Kanalteile in einen gemeinsamen Kreuzungsraum einmünden. An den Enden der zusätzlich zu den Seitenkanälen 402 bzw. 403 in die Kreuzungsräume einmündenden Kanälen sind jeweils die Reservoirs 321, 322, 334 bzw. die Reservoirs 332, 336, 337 fluidverbunden angeordnet. Jedes Reservoir 321, 322, 332, 333, 334, 335, 336, 337 ist mit jeweils einer Elektrode 371, 372, 382, 383, 384, 385, 386, 397 kontaktiert, die zum Ein- und/oder Ausleiten elektrischer Kenngrößen, insbesondere elektrischer Spannung und/oder elektrischen Stroms dienen. In den Reservoirs 321, 322 und 332 sind die Proben 341, 342 und 352 und in dem Reservoir 337 ist in diesem Fall die Referenzflüssigkeit 394 aufgenommen. Es versteht sich, daß das Reservoir 337 im allgemeinen auch zur Aufnahme einer Probenflüssigkeit verwendbar ist.

Nachfolgend wird ein weiteres wichtiges Ausführungsbeispiel für das erfindungsgemäße Verfahren erläutert: Ein großer Vorteil von als offene Netzwerke von miteinander fluidverbundenen Kanälen ausgebildeten Mikrofluid-Systemen, insbesondere Mikrofluid-Chips ist es, daß diese eine besonders ökonomische Arbeitsweise mit einer Vielzahl von unterschiedlichen Proben auf kleinem Raum ermöglichen. Es ist deshalb bei elektrophoretischen und/oder elektroosmotischen Trennanalysen üblich, daß parallel zur Trennanalyse betreffend eine bestimmte Probensubstanz, beispielsweise die Probe 341, der nächste Arbeitsvorgang bzw. die nachfolgende Trennanalyse bereits derart vorbereitet wird, daß in einer sogenannten Preinjektionsphase die nächste Probe, beispielsweise die Probe 352, an eine in möglichst geringem Abstand zur Injektionsstelle 365 angeordnete Übergangsstelle 367 "herangezogen" wird. Für einen definierten zeitlichen Ablauf dieser Preinjektionsphase ist es jedoch unbedingt erforderlich, daß innerhalb eines bestimmten Zeitraumes sämtliche Probenbestandteile der weiteren Probe 352 bis an die Übergangsstelle 367 gewandert sind. Denn andernfalls würden nicht sämtliche Probenbestandteile für die nachfolgende Analyse in dem Trennkanal 370 zur Verfügung stehen. Folglich muß in dem bis an die Übergangsstelle 367 heranreichenden und andernends in das Reservoir 332 zur Aufnahme der weiteren Probe 352 dienenden Kanalteil ebenfalls eine konstante Spannungsdifferenz eingestellt werden um nach Ablauf einer bestimmten Zeitspanne von einer erwarteten Bewegungsentfernung ausgehen zu können. Insofern ist dieser Kanalteil ebenfalls als Arbeitskanal 400 gestaltet. Auf diese Weise kann sichergestellt werden, daß innerhalb eines bestimmten Zeitraumes sämtliche Probenbestandteile in Ursprungskonzentration bis an die Übergangsstelle 367 gewandert sind, so daß bei einer nachfolgenden Umschaltung der einzelnen Elektroden die Probe durch den Seitenkanal 402 hindurch in den Seitenkanal 403 geleitet werden kann, damit anschließend ein weiterer Injektionsvorgang durch Anlegen einer Spannung an der Elektrode 383 und dadurch bedingte Injektion von Pufferlösung 353 durch den Verbindungskanal 401 möglich ist.

Um eine entsprechend sichere Preinjektionsphase gewährleisten zu können, ohne daß es zu Korossions- oder anderen elektrolytisch bedingten Erscheinungen an der interessierenden Übergangsstelle 367 kommt, ist der Referenzkanal 399 vorgesehen, an dessen von der Übergangsstelle 367 abgewandten Ende das Reservoir 337 mit der Referenzflüssigkeit 394 bzw. einer anderen Probe angeordnet ist. Auf diese Weise läßt sich an der Übergangsstelle 367 eine Art virtuelle Elektrode schaffen. Dies wird dadurch erreicht, daß zunächst der elektrische Strom (I₂) an der als Meßfühler fungierenden zweiten Elektrode 397 auf den Wert Null geregelt wird, so daß auf diese Weise die elektrische Spannung (U₂)an der zweiten Elektrode 397 gemessen bzw. erfaßt werden kann. Dabei wird an der ersten Elektrode 382, die mit dem die Probe 352 aufnehmenden Reservoir 332 kontaktiert ist, eine beliebige elektrische Spannung (U₁) angelegt.

Anschließend wird die elektrische Spannung (U₁) an der ersten Elektrode 382 auf einen um einen vorbestimmten Spannungswert von beispielsweise 200 Volt erhöhten Spannungswert geregelt. Dabei wird als vorbestimmter Spannungswert diejenige Spannungsdifferenz gewählt, welche sich in Vorversuchen für die Bewegung des betreffenden Fluids bzw. der darin enthaltenen Bestandteile in der vorgesehenen Zeit sinnvoll bzw. notwendig erwiesen hat. Ändern sich nun infolge innerer und/oder äußerer Störgrößen die elektrischen Parameter in dem Arbeitskanal 400, so kann vermittels des erfindungsgemäßen Reglers entsprechend dem aus Fig. 2 hervorgehenden Ausführungsbeispiel, die gewünschte Spannungsdifferenz im wesentlichen konstant gehalten werden, indem erneut die elektrische Spannung (U₂) an der als Meßelektrode ausgebildeten zweiten Elektrode 397 gemessen wird und indem entsprechend den vorstehend beschriebenen Schritten weiter vorgegangen wird.

Aufgrund der hydraulisch offenen Verbindung der einzelnen Kanäle untereinander, ist es jedoch bei einer parallelen Trennanalyse in dem Trenn- und Arbeitskanal 370 erforderlich, daß bestimmte, von der Injektionsstelle 365 in Richtung der Seitenkanäle 402 und 403 wegführende elektrische Ausgleichsströme 404 bzw. 405 eingestellt werden. Zu diesem Zwecke kann die vorstehend beschriebene Verfahrensweise sinnvoll derart ergänzt werden, daß auch die elektrische Stromstärke (I₁) an der ersten Elektrode 382 gemessen wird, anschließend eine Soll-Stromstärke (I₃-Soll) an der dritten Elektrode 386 unter Verwendung eines geeigneten Algorithmus berechnet wird, der im Ausführungsbeispiel auf der Anwendung des Kirchhoff'schen Gesetzes beruht, wonach die Summe aller Ströme stets gleich Null und damit konstant ist. Folglich wird die Soll-Stromstärke (I₃-Soll) an der dritten Elektrode 386 als Summe der sich an der ersten Elektrode 382 gemessenen Stromstärke (I₁) und einer vorbestimmten bzw. vorbestimmbaren Stromstärke (I₄) (Pfeil 404) in dem auch als vierten kanal bezeichneten Seitenkanal 402 berechnet. Anschließend wird die Stromstärke (I₃) an der dritten Elektrode 386 auf den Wert der zuvor berechneten Soll-Stromstärke (I₃-Soll) geregelt, und zwar vermittels einer weiteren, in den Figuren nicht näher gezeigten Regeleinrichtung. In letzterem Falle dient folglich die erste Elektrode 382 auch als Meßelektrode zur Messung der elektrischen Stromstärke (I₁).

Auf die vorstehend beschriebene Art und Weise kann folglich durch Wiederholung der entsprechenden Schritte unter Verwendung geeigneter Regeleinrichtungen erreicht werden, daß unabhängig von inneren und/oder äußeren Störgrößen sowohl die Differenzspannung über den, zwischen dem Kontaktbereich der ersten Elektrode 382 und der Übergangsstelle 367 angeordneten Abschnitt des Arbeitskanals 400 für die Preinjektionsphase eine im wesentlichen konstante Spannung eingestellt werden kann, als auch in dem Seitenkanal 402, der die Übergangsstelle 367 mit der Injektionsstelle 365 verbindet, eine im wesentlichen konstante, vorbestimmte elektrische Stromstärke I₄ (Ausgleichsstrom 404) eingestellt werden kann, die erforderlich ist, um den parallel zur Preinjektionsphase ablaufenden Trennvorgang in der gewünschten Weise ausführen zu können.

## Patentansprüche

1. Mikrofluid-System, insbesondere Mikrofluid-Chip, mit wenigstens einem Arbeitskanal (270) in dem ein Fluid und/oder darin enthaltene Bestandteile vermittels einer treibenden Kraft, insbesondere durch Anwendung von Druck, akustischer Energie und/oder eines elektrischen Feldes in Richtung des Arbeitskanals bewegbar sind,
worin wenigstens ein Meßfühler zur Messung einer dem Fluid zugeordneten und im Bereich des Fluids ableitbaren Meßgröße und wenigstens ein Regler (192) zur Regelung der treibenden Kraft und/oder einer dadurch beeinflußbaren Kenngröße vorgesehen ist, wobei der Regler (192) mit dem Meßfühler und einer Einrichtung zur Veränderung der treibenden Kraft (189) und/oder der dadurch beeinflußbaren Kenngröße gekoppelt ist.
**dadurch gekennzeichnet:**
**daß** mit dem Arbeitskanal (270) wenigstens ein in diesen einmündender Meßkanal (299) verbunden ist, der mit dem Meßfühler gekoppelt ist,
der Arbeitskanal (270) und der Meßkanal (299) miteinander fluidverbunden sind und zu einem gemeinsamen Electro-Spray-Interface - ESI - -Punkt führen,
der Arbeitskanal (270) und der Meßkanal (299) an ihrem jeweiligen, von dem gemeinsamen Kanalraum entfernten Ende jeweils mit einer Elektrode (283, 300) zur Ausübung eines elektrischen Feldes auf das Fluid kontaktiert sind, und
der Regler (192) die Summe des elektrischen Stromes in dem gemeinsamen ESI-Punkt dergestalt regelt, daß ein bestimmter ESI-Reststrom verbleibt.

2. Mikrofluid-System nach Anspruch 1, **dadurch gekennzeichnet, daß** dieses mit einem offenen Netzwerk von miteinander fluidverbundenen Kanälen ausgebildet ist, wobei wenigstens drei, vorzugsweise vier der Kanäle in einen gemei n-samen, insbesondere punktartig ausgebildeten Kanalraum einmünden, wobei einer der Kanäle als Meßkanal (299, 399, 400) fungiert.

3. Verfahren zum Transport und der Führung eines Fluids und/oder darin enthaltener Bestandteile in einem Mikrofluid-System, insbesondere einem Mikrofluid-Chip, worin das Mikrofluid-System aufweist:
wenigstens einen Arbeitskanal(270), in dem das Fluid und/oder darin enthaltene Bestandteile vermittels einer treibenden Kraft, insbesondere durch Anwendung von Druck, akustischer Energie, eines elektrischen und/oder eines magnetischen Feldes in Richtung des Arbeitskanals bewegt wird, einen Meßfühler (283, 397, 382) zur Messung einer dem Fluid zugeordneten und im Bereich des Fluids ableitbaren Meßgröße,
eine Einrichtung zur Veränderung der treibenden Kraft (189) und/oder einer dadurch beeinflußbaren Kenngröße,
einen mit dem Meßfühler (283, 397, 382) gekoppelten Regler (192) zur Regelung der treibenden Kraft und/oder der dadurch beeinflußbaren Kenngröße, wobei mit dem Arbeitskanal (270) wenigstens ein in diesen einmündender Meßkanal (299) verbunden ist, der mit dem Meßfühler gekoppelt ist,
der Arbeitskanal (270) und der Meßkanal (299) miteinander fluidverbunden sind und zu einem gemeinsamen Electro-Spray-Interface - ESI - -Punkt führen, und
der Arbeitskanal (270) und der Meßkanal (299) an ihrem jeweiligen, von dem gemeinsamen Kanalraum entfernten Ende jeweils mit einer Elektrode (283, 300) zur Ausübung eines elektrischen Feldes auf das Fluid kontaktiert sind, und
das Verfahren den Schritt aufweist, dass der Regler (192) die Summe des elektrischen Stromes in dem gemeinsamen ESI-Punkt dergestalt regelt, daß ein bestimmter ESI-Reststrom verbleibt.

4. Verfahren nach Anspruch 3, **dadurch gekennzeichnet, daß** der Regler (192) die treibende Kraft und/oder die dadurch beeinflußbare Kenngröße derart regelt, daß diese im wesentlichen konstant gehalten wird.

5. Verfahren nach Anspruch 3, **dadurch gekennzeichnet, daß** der Regler (192) die treibende Kraft und/oder die dadurch beeinflußbare Kenngröße derart regelt, daß der Gradient der treibenden Kraft und/oder der Gradient der durch die treibende Kraft beeinflußbaren Kenngröße über einen bestimmten Abschnitt des Arbeitskanals (170, 270, 370, 400) im wesentlichen konstant gehalten wird bzw. werden.

6. Verfahren nach Anspruch 3, **dadurch gekennzeichnet, daß** der Regler (192) die treibende Kraft und/oder die dadurch beeinflußbare Kenngröße dergestalt regelt, daß eine im wesentlichen konstante oder vorbestimmte joulesche Verlustleistung erreicht wird.

7. Verfahren nach Anspruch 3 **dadurch gekennzeichnet, daß** eine Identifikation der Probenbestandteile abhängig von einer am Trennkanal angelegten Differenzspannung erfolgt.

8. Verfahren nach einem der Ansprüche 3 bis 7, **dadurch gekennzeichnet, daß** bei dem als offenes Netzwerk von miteinander fluidverbundenen Kanälen ausgebildeten Mikrofluid-System (10, 210, 310) mehrere Kanäle in einen gemeinsamen, insbesondere punktartig ausgebildeten Kanalraum einmünden, wobei wenigstens einer der Kanäle als Meßkanal (299, 399, 400) fungiert, und wobei die Kanäle an ihrem jeweiligen, von dem Kanalraum entfernten Ende, jeweils mit einer Elektrode (297, 397, 382) zur Ausübung eines elektrischen Feldes auf das Fluid kontaktiert sind, und wobei die Elektroden mit elektrischem Strom und/oder elektrischer Spannung beaufschlagbar sind, und wobei einem ersten Kanal eine erste Elektrode und einem zweiten Kanal eine zweite Elektrode zugeordnet ist, **gekennzeichnet durch** die folgenden Schritte:
a) Regelung des elektrischen Stromes (I₂) an der zweiten, als Meßfühler fungierenden Elektrode auf den Wert Null;
b) Messen der elektrischen Spannung (U₂)an der zweiten Elektrode, wobei an der ersten Elektrode eine beliebige Spannung (U₁)angelegt ist;
c) Regelung der elektrischen Spannung (U₁) an der ersten Elektrode dergestalt, daß die Differenz zwischen U₁ und U₂ einen vorbestimmten Wert erreicht.

9. Verfahren nach einem der Ansprüche 3 bis 7,
**dadurch gekennzeichnet, daß**
bei dem als offenes Netzwerk von miteinander fluidverbundenen Kanälen ausgebildeten Mikrofluid-System (10, 210, 310) wenigstens vier Kanäle in einen gemeinsamen, insbesondere punktartig ausgebildeten Kanalraum einmünden, wobei wenigstens einer der Kanäle als Meßkanal (299, 399, 400) fungiert, und
wobei wenigstens drei der Kanäle an ihrem jeweiligen, von dem Kanalraum entfernten Ende, jeweils mit einer Elektrode (283, 284, 297; 382, 386, 397) zur Ausübung eines elektrischen Feldes auf das Fluid kontaktiert sind, und wobei die Elektroden mit elektrischem Strom und/oder elektrischer Spannung beaufschlagbar sind, und wobei dem
ersten Kanal eine erste Elektrode, dem zweiten Kanal eine zweite Elektrode und dem dritten Kanal eine dritte Elektrode zugeordnet ist,
**gekennzeichnet durch** die folgenden Schritte:
a) Regelung des elektrischen Stromes (I₂) an der zweiten, als Meßfühler fungierenden Elektrode auf den Wert Null;
b) Messen der elektrischen Spannung (U₂)an der zweiten Elektrode, wobei an der ersten Elektrode eine beliebige Spannung (U₁)angelegt ist;
c) Regelung der elektrischen Spannung (U₁) an der ersten Elektrode dergestalt, daß die Differenz zwischen U₁ und U₂ einen vorbestimmten Wert erreicht;
d) Messen der elektrischen Stromstärke (I₁) an der ersten Elektrode;
e) Berechnen einer Soll-Stromstärke (I₃-Soll) an der dritten Elektrode als Summe der an der ersten Elektrode gemessenen Stromstärke (I₁) und einer vorbestimmten, dem vierten Kanal zugeordneten Stromstärke (I₄);
f) Regelung der Stromstärke (I₃) an der dritten Elektrode auf den Wert der zuvor berechneten Soll-Stromstärke (I₃-Soll);
g) Wiederholung der Schritte b) bis f).
